Europäisches Patentamt

European Patent Office

Office européen des brevets

(19)

(11) **EP 1 111 521 A2**

(12) **EUROPEAN PATENT APPLICATION**

(43) Date of publication:
**27.06.2001 Bulletin 2001/26**

(51) Int Cl.[7]: **G06F 17/50**

(21) Application number: **00128002.3**

(22) Date of filing: **20.12.2000**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **22.12.1999 JP 36545399**

(71) Applicant: **NEC CORPORATION**
**Tokyo (JP)**

(72) Inventor: **Yokota, Ikuhiro, c/oNEC Corporation Tokyo (JP)**

(74) Representative: **Baronetzky, Klaus, Dipl.-Ing. et al**
**Splanemann Reitzner**
**Baronetzky Westendorp**
**Patentanwälte**
**Rumfordstrasse 7**
**80469 München (DE)**

(54) **Semiconductor device simulation method**

(57) Disclosed is a computer-implemented method for simulating a semiconductor device, comprising steps of inputting physical constants of the semiconductor device; performing iterative calculation in which potential distribution, electron current density, and hole current density are solved using a drift-diffusion model represented by charge conservation equations, electron current continuation equations, and hole current continuation equations; wherein each iteration of the calculation comprises steps of: calculating an expansion amount of a band gap using an interim solution to take into consideration a quantum effect in an inversion layer; correcting potentials of electrons and holes with the expansion amount of the band gap to take into consideration the quantum effect in the inversion layer; wherein the expansion amount is obtained by steps of providing a provisional term representing the expansion amount, based on a calculation equation in accordance with a van Dort model; regarding the provisional term as being caused by zeroth-order energy perturbation due to an electric field perpendicular to an interface between a semiconductor and an insulating film; adding one or more terms representing first- and/or higher-order energy perturbation due to the electric field perpendicular to the interface between the semiconductor and the insulating film to the provisional term; and setting the sum of the addition as the expansion amount.

## FIG.1

```
        START
          │
  SET INITIAL VALUE x_0   ~701
          │
        i = 0   ~702
          │
          ▼
   δx_i = - F(x_i)/F'(x_i)   ~703
          │
          ▼
      δx_i < ε ?   ~704   ──YES──┐
          │                      │
         NO                      │
          │                      │
  x_{i+1} = x_i + δx_i   ~705    │
      i = i + 1                  │
          │                      │
          └──────────────┐       │
                         ▼       │
                        END ◄────┘
```

**EP 1 111 521 A2**

**Description**

<u>BACKGROUND OF THE INVENTION</u>

Field of the Invention:

The present invention relates to a numerical analysis of a semiconductor device.

Description of the Related Art:

A drift-diffusion model in which carriers (electrons, holes) are regarded and approximated as fluid, and an energy transport model in which a higher-order approximation is carried out have been widely used for a numerical analysis of a semiconductor device. In a device simulation based on the drift-diffusion model under the stationary state, the following charge conservation equation, electron current continuation equation and hole current continuation equation are set as fundamental equations (Ryo Dan "Process device Simulation Technology", p100, in 1990 issued by Sangyo Tosho).

$$\mathrm{div}D = \rho \qquad \text{(charge conservation equation)} \tag{1}$$

$$D = \varepsilon E \tag{2}$$

$$E = -\mathrm{grad}\Psi \tag{3}$$

$$\rho = q(p-n+N_D-N_A) \tag{4}$$

$D$ : electric flux density
$\rho$ : charge density
$E$ : electric field
$\varepsilon$ : dielectric constant
$q$ : elementary charge
$p$ : hole density
$n$ : electron density
$N_D$ : donor density
$N_A$ : acceptor density

$$\mathrm{div}J_n = q{\bullet}(R-G) \qquad \text{(electron current continuation equation)} \tag{5}$$

$$\mathrm{div}Jp = -q{\bullet}(R-G) \text{ (hole current continuation equation)} \tag{6}$$

$J_n$ : electron current density
$J_p$ : hole current density
$R$ : carrier recombination term
$G$ carrier generation term

$$J_n : q{\bullet}n{\bullet}\mu_n{\bullet}E + q{\bullet}D_n{\bullet}\mathrm{grad}\, n \tag{7}$$

$$Jp : q{\bullet}n{\bullet}\mu_p{\bullet}E - q{\bullet}D_p{\bullet}\mathrm{grad}\, p \tag{8}$$

$\mu_n$ : electron mobility

$\mu_p$ : hole mobility
Dn : electron diffusion coefficient
Dp : hole diffusion coefficient

$$Dn = \mu_n \cdot k_B \cdot T/q \tag{9}$$

$$Dp = \mu_p \cdot k_B \cdot T/q \tag{10}$$

$K_b$ : Boltzmann's constant
T : lattice temperature

The variables to be solved in the above equations are potential $\phi$, electron density n and hole density p.

In the energy transport model under the stationary state is set the following type equation in which the energy conservation equation of carriers (electrons and holes) is added to the fundamental equations of the drift-diffusion model (Thoma et al. "Hydrodynamic Equations for Semiconductors with Nonparabolic Band Structure", IEEE Transaction on Electron Devices, Vol. 38, No. 6, 1991).

$$divD = \rho \qquad \text{(charge conservation equation)} \tag{11}$$

$$D = \varepsilon E \tag{12}$$

$$E = -grad\Psi \tag{13}$$

$$\rho = q(p-n+N_D-N_A) \tag{14}$$

$$divJn = q \cdot (R-G) \qquad \text{(electron current continuation equation)} \tag{15}$$

$$divJp = -q \cdot (R-G) \qquad \text{(hole current continuation equation)} \tag{16}$$

$$Jn = q \cdot n \cdot \mu_n \cdot E + \mu_n \cdot (\tau in/\tau^*{}_{in}) \cdot grad(nk_BTn) \tag{17}$$

$$Jp = q \cdot p \cdot \mu_p \cdot E - \mu_p \cdot (\tau ip/\tau^*{}_{ip}) \cdot grad(pk_BT^*n) \tag{18}$$

$T^*n$ : electron temperature
$T^*p$ : hole temperature
$\tau_{in}$ : electron momentum relaxation time
$\tau_{ip}$ : hole momentum relaxation time

$$\tau^*{}_{in} = (1/3)m^*{}_n <M_n^{-1}>\tau_{in} \tag{19}$$

$$\tau^*{}_{ip} = (1/3)m^*{}_p <M_p^{-1}>\tau_{lp} \tag{20}$$

$m^*{}_n$ : effective mass of electron
$m^*{}_p$ : effective mass of hole
$M^{-1}{}_n$ : inverse effective mass tensor of electron

$M^{-1}{}_p$ : inverse effective mass tensor of hole

< > : averaging operation in k space

$$divS_n = -J_n \bullet grad\Psi - \frac{3}{2}k_B n \, \frac{T_n^*-T_{neq}}{T_{wp}^*} \quad \text{(electron energy conservation equation)} \tag{21}$$

$$divS_p = +J_p \bullet grad\Psi - \frac{3}{2}k_B p \, \frac{T_p^*-T_{peq}}{T_{wp}^*} \quad \text{(hole energy conservation equation)} \tag{22}$$

Sn : electron energy flux density

Sp : hole energy flux density

$T_{neq}$ : electron equilibrium temperature

$T_{peq}$ : hole equilibrium temperature

$$\tau_{wn}^* = \frac{2}{3}k_B(T_n^*-T_{neq})\frac{\tau_{wn}}{<\varepsilon_n><\varepsilon_{neq}>} \tag{23}$$

$$\tau_{wp}^* = \frac{2}{3}k_B(T_p^*-T_{peq})\frac{\tau_{wp}}{<\varepsilon_p><\varepsilon_{peq}>} \tag{24}$$

$<\varepsilon_n>$ : average electron energy

$<\varepsilon_p>$ : average hole energy

$<\varepsilon_{neq}>$ : electron equilibrium energy

$<\varepsilon_{peq}>$ : hole equilibrium energy

$\tau_{wn}$ : electron energy relaxation time

$\tau_{wp}$ : hole energy relaxation time

$$S_n = -\frac{5}{2}\frac{k_B T_n^*}{q}\frac{\tau_{sn}^\bullet}{\tau_{in}^\bullet}\left\{+J_n + \frac{q}{m_n^\bullet}\tau_{in}ngrad(k_B T_n^*)\right\} \tag{25}$$

$$S_p = -\frac{5}{2}\frac{k_B T_p^*}{q}\frac{\tau_{sp}^\bullet}{\tau_{ip}^\bullet}\left\{-J_p + \frac{q}{m_p^\bullet}\tau_p pgrad(k_B T_p^*)\right\} \tag{26}$$

$$\tau_{sn}^\bullet = \frac{\frac{1}{3}\left\langle M_n^{-1}\varepsilon_n + v_n v_n\right\rangle}{\frac{5}{6}\left\langle v_n^2\right\rangle}\tau_{sn} \tag{27}$$

$$\tau_{sp}^{\cdot} = \frac{\frac{1}{3}\left\langle M_p^{-1}\varepsilon_p + v_p v_p \right\rangle}{\frac{5}{6}\left\langle v_p^2 \right\rangle}\tau_{sp} \tag{28}$$

$\tau_{sn}$ : relaxation time corresponding to electron energy flux density Sn
$\tau_{sp}$ : relaxation time corresponding to hole energy flux density Sp
$v_n$ : electron velocity
$v_p$ : hole velocity

The variables to be solved in the above energy transport model are potential $\phi$, electron density n, hole density p, electron temperature $T^*n$ and hole temperature $T^*p$. Here, aeration of $^*$ to the symbol of the carrier temperature is to discriminate the carrier temperature from the definition of the thermodynamic temperature as shown in the following equation.

$$Tn = \frac{2}{3k_B}\left\langle \varepsilon_n \right\rangle \tag{29}$$

$$Tp = \frac{2}{3k_B}\left\langle \varepsilon_p \right\rangle \tag{30}$$

In order to avoid difficulties, the description of $^*$ is omitted from the following description.
In general, the five equations of the charge conservation equation, the electron current continuation equation, the hole current continuation equation, the electron energy conservation equation and the hole energy conservation equation are calculated by setting plural given applied bias values as boundary conditions and successively renewing the bias.
Since these equations are non-linear equations, a repetitive calculation referred to as "Newton's method" is carried out to solve these equations. The Newton's method is the following method.
It is assumed that the following equation for variable x is given as an equation to be calculated.

$$F(x) = 0 \tag{31}$$

When an initial value $x_0$ is given, if a value obtained by adding $x_0$ with a variable $\delta x_0$ gives a solution, the following equation is satisfied:

$$F(x+\delta x_0) = 0 \tag{32}$$

When a differential coefficient of F(x) is assumed as $F'(x_0)$ and a primary Taylor's expansion is carried out on $F(x_0+\delta x_0)$ for $\delta x_0$ on the basis of $F(x_0)$, the following equation is obtained.

$$F(x + \delta x_0) = F(x_0) + F'(x_0)\delta x_0$$
$$= 0 \tag{33}$$

$$\delta\chi_0 = -\frac{F(\chi_0)}{F'(\chi_0)} \tag{34}$$

Next, on the basis of the following equation, the same calculation is carried out for $x_1$:

$$x_1 = x_0 + \delta x_0$$

This calculation is repeated, and if $\delta x_i$ in the i-th calculation is smaller than a suitable minute amount $\varepsilon$ (this state is referred to as "converged", and this judgement is referred to as "convergence judgment" and the minute amount $\varepsilon$ is referred to as "convergence condition"), and $x_i$ at that time is a solution of the equation (31).

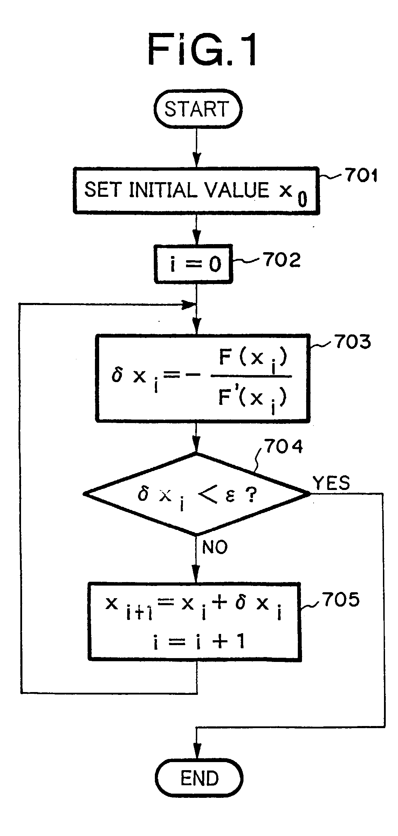

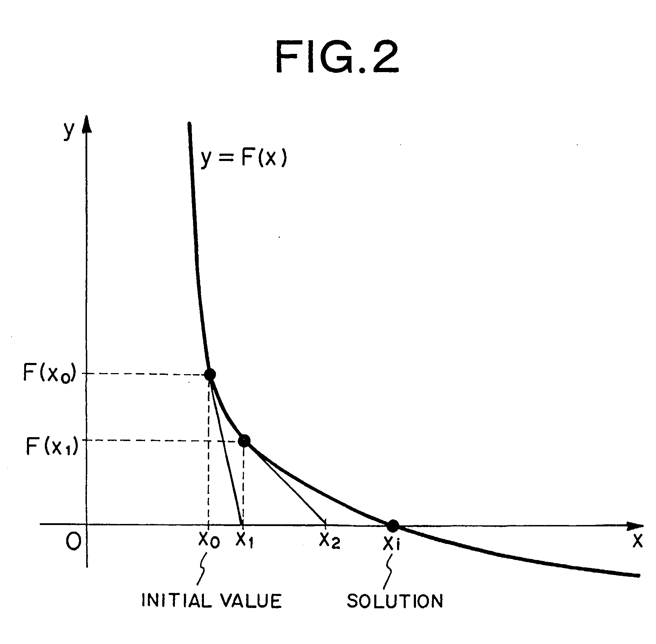

The procedure of Fig. 1 corresponds to the flow of this processing. Fig. 2 schematically shows this procedure.

In the case of one dimension, the calculation approaches to the solution while the intersection point between the tangent of F(x) at the current coordinate $x_i$ and the x axis is set as a coordinate $x_i$ for the next calculation. As a given initial value is nearer to the solution, the repetitive frequency required to obtain the resolution is smaller, and thus a calculation time required to obtain the solution is shorter.

The above processing is the manner of the Newton's method.

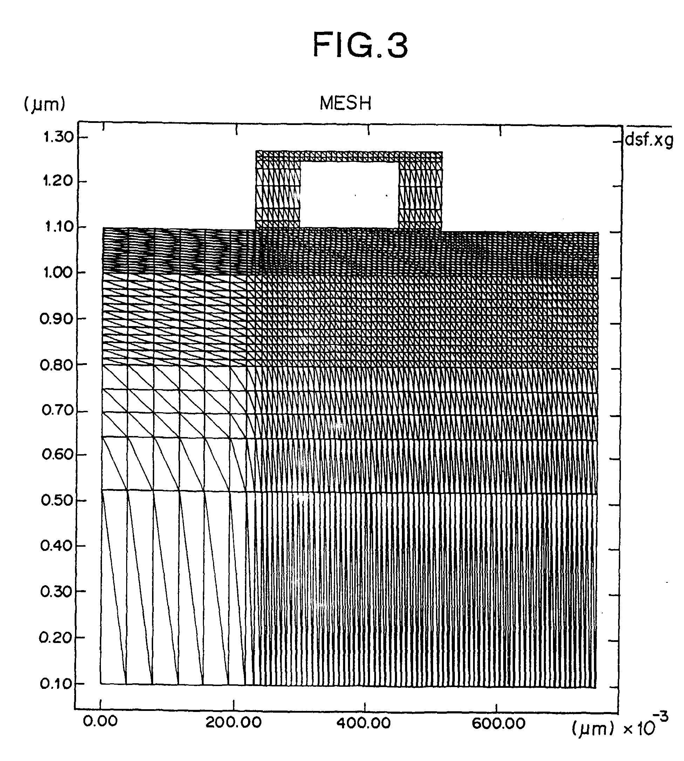

In the above description, the Newton's method is applied to one-variable equations. In the device simulation, a mesh is generated over the whole analysis area, and the equations are set for variables on contact points of the mesh. An example of the analysis mesh is shown in Fig. 3.

That is, a potential, electron density, hole density, electron temperature and hole temperature for mesh nodes as many as N appear as variables, and thus simultaneous partial differential equations of 5N must be solved. The charge conservation equation, the electron current continuation equation, the hole current continuation equation, the electron energy conservation equation and the hole energy conservation equation at each mesh node are represented in a form in which the terms at the right sides are shifted to the left sides as follows:

$$F_\psi(\psi,n,p,T_n,T_p) = 0 \qquad \text{(charge conservation equation)} \tag{36}$$

$$F_n(\psi,n,p,T_n,T_p) = 0 \qquad \text{(electron current continuation equation)} \tag{37}$$

$$F_p(\psi,n,p,T_n,T_p) = 0 \qquad \text{(hole current continuation equation)} \tag{38}$$

$$F_{T_n}(\psi,n,p,T_n,T_p) = 0 \qquad \text{(electron energy conservation equation)} \tag{39}$$

$$F_{T_p}(\psi,n,p,T_n,T_p) = 0 \qquad \text{(hole energy conservation equation)} \tag{40}$$

$\psi$,n, p, $T_n$, $T_p$ represent vector variables each comprising N elements for the potential, the electron density, the hole density, the electron temperature and the hole temperature. In this case, there are a coupled method for simultaneously solving the simultaneous partial differential equations for the charge conservation equation, the hole current continuation equation, the electron energy conservation equation and the hole energy conservation equation, and Gummel method (non-coupled method or decoupled method) for separately solving each of the simultaneous partial differential equation for the charge conservation equation, the simultaneous partial differential equation for the electron current continuation equation, the simultaneous partial differential equation for the hole current continuation equation, the simultaneous partial differential equation for the electron energy conservation equation and the simultaneous partial differential equation for the hole energy conservation equation.

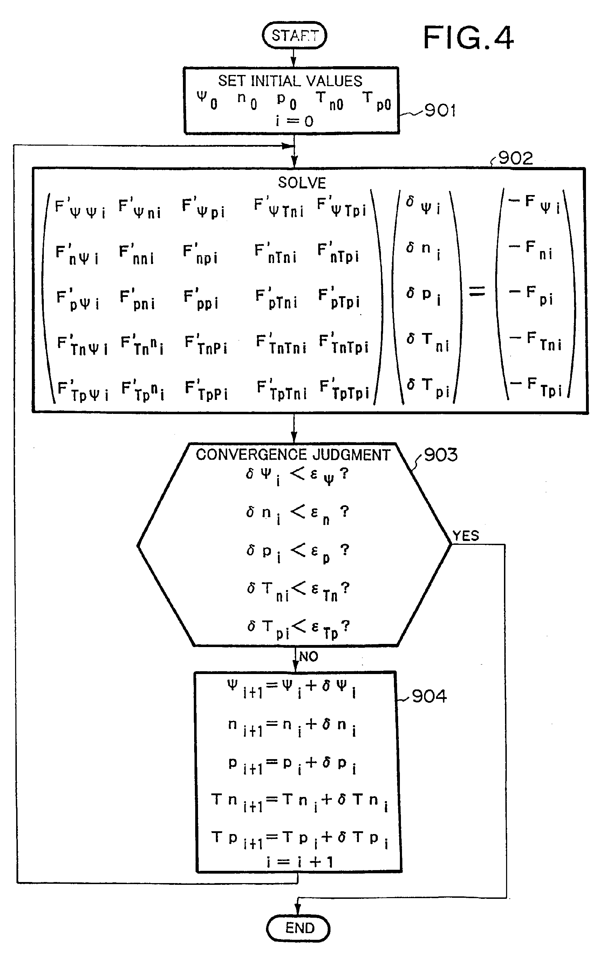

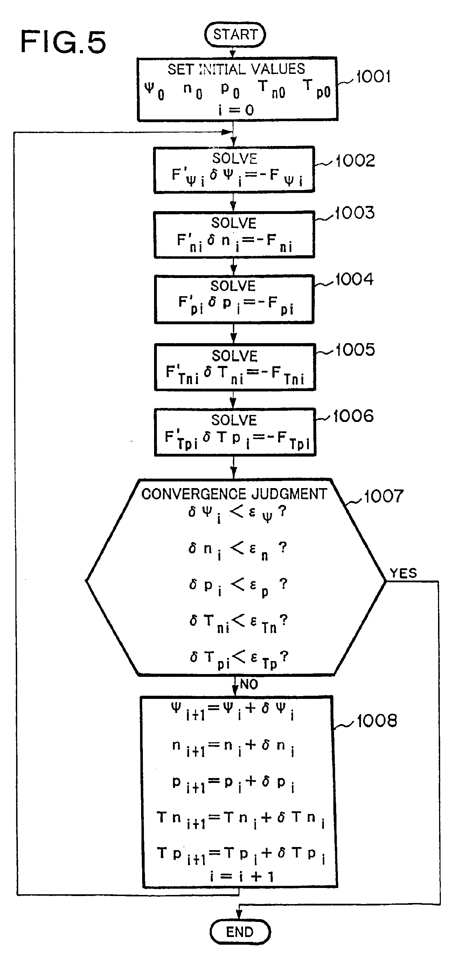

The procedure of the coupled method is shown in Fig. 4, and the procedure of Gummel method is shown in Fig. 5.

In a matrix equation of a processing step 902 of Fig. 4, the symbol $F'_{\psi n}$ represents the following partial differential:

$$F'_{\psi n} = \frac{\partial F_\psi}{\partial n}$$ (41)

The same is applied to the other subscripts.

A matrix F'$_\psi$ of a processing step 1002 of Fig. 5 represents the following partial differential equation:

$$F'_\Psi = \frac{\partial F_\Psi}{\partial \Psi}$$

The same is applied to matrixes of 1003 to 1006.

According to the coupled method, the solutions are simultaneously calculated for all the variables. On the other hand, according to Gummel method, the variables other than a variable being noted are fixed and the respective simultaneous partial differential equations are solved. For example, in the processing procedure of solving the simultaneous partial differential equation for the electron energy conservation equation, the variables of the potential, the electron density, the hole density and the hole temperature other than the variables of the electron temperature are fixed.

A matrix calculation is carried out to repetitively solve the respective equations. Through one repetitive calculation, one matrix of 5Nx5N is solved in the coupled method, and five matrixes of NxN are solved in Gummel method.

The coupled method can determine the solutions with a small repetitive frequency, however, it would not be converged unless a good initial value is given to the calculation. On the other hand, Gummel method is not strongly dependent on the initial value, however, it needs a large repetitive frequency. The calculation time required for one repetitive operation is shorter in the Gummel method than in the coupled method, however, the repetitive frequency is smaller in the coupled method than in Gummel method. It is known that the total calculation time required to achieve the solutions is shorter in the coupled method than in Gummel method in most cases. Therefore, if a good initial value is given, the analysis of the semiconductor device can be performed in a short calculation time by the coupled method.

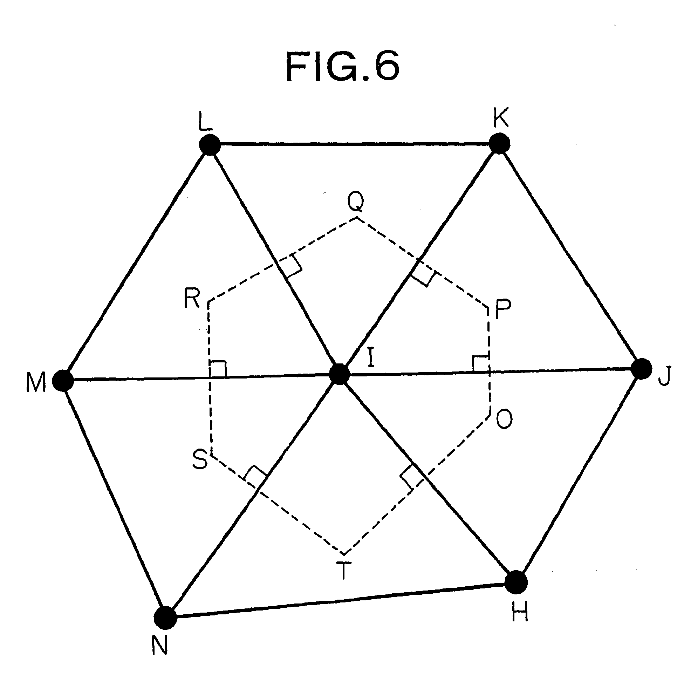

A control volume method is used to discretize original equations to equations represented by an analysis mesh. To exemplify a part of a triangle meshes represented by a solid line of Fig. 6, a polygon formed by bisectors (shown by a broken line ) of mesh edges connected to a central mesh node is a control volume. The apexes of the polygon of the control volume correspond to the circumcenters (the centers of the circumscribing circles) of triangular elements of the mesh.

According to the control volume method, the stream of a physical amount (for example, current) on a mesh edge IJ is represented by the amount corresponding to the product of the density of the stream on the edge (for example, current density) and the length of a side OP of the control volume (referred to as "cross section" in the case of two dimension as well as in general).

In the analysis equation described above, the carrier particles are assumed to be conformed with Maxwell-Boltzmann's Statistics, and the carrier distribution obtained through the analysis becomes a distribution based on classical mechanics. As a result, in a device simulation for MOSFET, the distribution of carriers in an inversion layer along the depth direction of the substrate in the vicinity of the interface of a gate oxide film has a peak on the interface of the gate oxide film and is shapely reduced along the depth direction of the substrate.

On the other hand, when the carrier particles are regarded as quantum-mechanical particles which are conformed with Ferimi-Dirac's statistics and a one-dimensional analysis in the depth direction of the substrate of MOSFET is made, waviness of carriers which is a feature of the quantum-mechanical particles appears, and an inversion layer carrier distribution is obtained in the form of a standing wave which stationarily exists in the valley of potential in the vicinity of the interface of the gate oxide film. That is, the peak of the distribution exists at a position which is far away from the interface of the gate oxide film. Specifically, this analysis solves the Poisson's equation and Schrödinger's equation with self-consistency. Such an analysis method is possible for a one-dimensional analysis, but it is generally difficult for two-dimensional analysis and three-dimensional analysis.

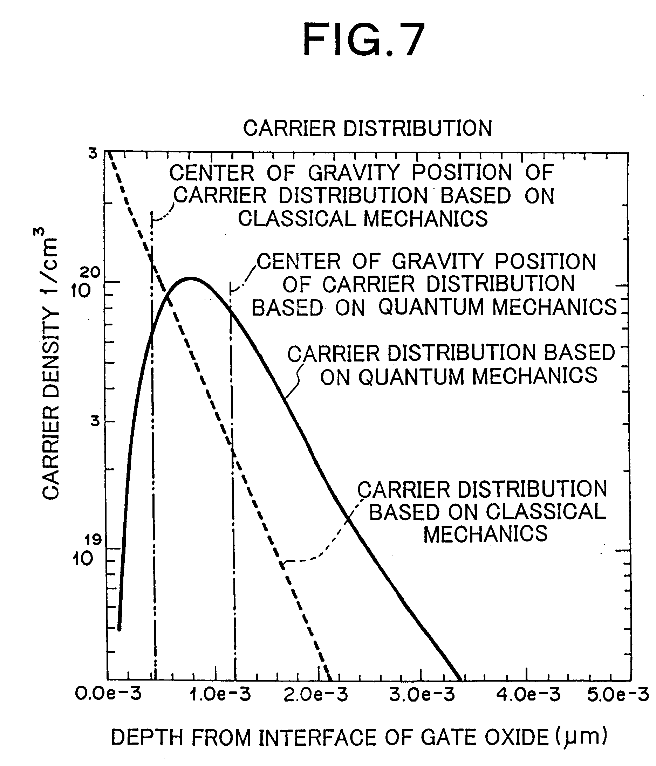

Fig. 7 schematically shows a distribution based on the classical mechanics and a distribution based on the quantum mechanics for the inversion layer carriers of MOSFET.

The center of gravity of the carrier distribution is farther from the interface of the gate oxide film in the distribution based on the quantum mechanics than that in the distribution based on the classical mechanics. This brings the same effect as the case where the thickness of the gate oxide film is increased (that is, the capacitance of the gate oxide film is reduced). In other words, the electrical thickness of the gate oxide film is increased.

Further, with respect to the energy level of the carriers, it is assumed in the classical mechanics that the energy level of the carriers is coincident with the bottom of the potential (that is, in the case of electrons, the bottom of the conduction band, and in the case of holes, the top of the valence band). On the other hand, in the quantum mechanics, it is higher than the bottom of the potential. According to the calculation based on the quantum mechanics, the bias to be applied to the carriers is reduced by the amount corresponding to the difference in the energy level of the carriers even if the same gate voltage is applied, and the carrier inducing amount of the inversion layer is also smaller in the calculation based on the quantum mechanics less than that on the classical mechanics. That is, this brings the same effect as the case where the capacitance of the gate oxide film is reduced, and also this effect corresponds to the increase of the electrical thickness of the gate oxide film.

As described above, it is found that the quantum-mechanical effect on the carriers in the inversion layer corresponds to the increase of the electrical gate oxide film thickness. The above-described effect is referred to as "inversion layer quantum effect".

As the thickness of the gate oxide film is reduced due to the microstructure of the device, the increase of the electrical gate oxide film thickness due to the inversion layer quantum effect is relatively greater as compared with the physical gate oxide film thickness, and thus the effect of the inversion layer quantum effect is greater. In such a situation, the device simulation based on the classical mechanics does not provide an accurate analysis result.

A van Dort's model is known as a method of taking into consideration the effect of the inversion layer quantum effect within the framework of the fundamental equations of the device simulation based on the classical mechanics [van Dort et al. solid-state Electronics, vol.37, pp.411, 1994]. According to this model, the effect that a carrier inducing amount is reduced in the carrier distribution based on the quantum mechanics than the carrier distribution based on the classical mechanics is associated with the reduction of the carrier inducing amount due to the expansion of the band gap, and this association is introduced into the fundamental equations of the device simulation.

That is, representing the expansion of the band gap corresponding to the inversion layer quantum effect by $\triangle \varepsilon$, the equation (6) which is the electric field equation in the fundamental equations of the drift-diffusion model for the device simulation is calculated as follows:

$$E = -grad\ (\psi + \Delta\varepsilon) \qquad (electron)$$

$$-grad(\psi - \Delta\varepsilon) \qquad (hole) \qquad (3a)$$

Likewise, the following equation is also used for the electric field equation (16) in the fundamental equations of the energy transport model:

$$E = -grad(\psi + \Delta\varepsilon) \qquad (electron)$$

$$-grad(\psi - \Delta\varepsilon) \qquad (hole) \qquad (13a)$$

The expansion amount $\Delta\varepsilon$ of the band gap corresponding to the inversion layer quantum effect is calculated by the following equation:

$$\Delta\varepsilon = \left\{ \frac{13}{9}\beta\left(\frac{\varepsilon_{Si}\varepsilon_0}{4k_B T}\right)^{\frac{1}{3}} E_\perp^{\frac{2}{3}} \right\} f(y) \qquad (42)$$

$$f(y) = \frac{2\exp(-y^2)}{1 + \exp(-2y^2)} \qquad (43)$$

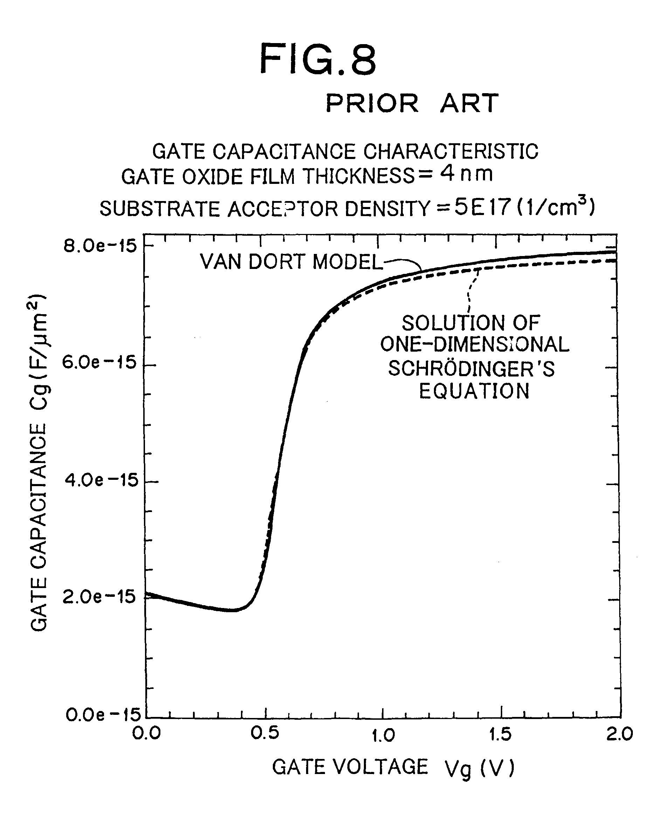

Fig. 8 shows a calculation result obtained when the van Dort model is applied to a specific example. This example aims to calculate the gate capacitance when the gate voltage from 0V to 2V is applied to a one-dimensional NMOS capacitance device having a gate oxide film of thickness of 4nm and an impurity density of substrate acceptors of $5.0 \times 10^{17}/cm^3$.

In an area where the gate voltage is low, the calculation result is very coincident with the calculation result obtained by the calculation of the Schrödinger equation. However, in an area where the gate voltage is high, no good coincidence is obtained.

## EP 1 111 521 A2

SUMMARY OF THE INVENTION

An object of the present invention is to provide a device simulation method which can more excellently express the inversion layer quantum effect in an area where the gate voltage is high.

According to a first aspect of the present invention, there is provided a computer-implemented method for simulating a semiconductor device, comprising steps of: inputting physical constants of the semiconductor device; correcting potentials of electrons and holes with an expansion amount of a band gap to take into consideration a quantum effect in an inversion layer; simulating a semiconductor device using the corrected potentials of the electrons and holes; wherein the expansion amount is obtained by steps of providing a provisional term representing the expansion amount, based on a calculation equation in accordance with a van Dort model; regarding the provisional term as being caused by zeroth-order energy perturbation due to an electric field perpendicular to an interface between a semiconductor and an insulating film; adding one or more terms representing first- and/or higher-order energy perturbation due to the electric field perpendicular to the interface between the semiconductor and the insulating film to the provisional term; and setting the sum of the addition as the expansion amount.

According to a second aspect of the present invention, there is provided a computer-implemented method for simulating a semiconductor device, comprising steps of: inputting physical constants of the semiconductor device; performing iterative calculation in which potential distribution, electron current density, and hole current density are solved using a drift-diffusion model represented by charge conservation equations, electron current continuation equations, and hole current continuation equations; wherein each iteration of the calculation comprises steps of: calculating an expansion amount of a band gap using an interim solution to take into consideration a quantum effect in an inversion layer; correcting potentials of electrons and holes with the expansion amount of the band gap to take into consideration the quantum effect in the inversion layer; wherein the expansion amount is obtained by steps of: providing a provisional term representing the expansion amount, based on a calculation equation in accordance with a van Dort model; regarding the provisional term as being caused by zeroth-order energy perturbation due to an electric field perpendicular to an interface between a semiconductor and an insulating film; adding one or more terms representing first- and/or higher-order energy perturbation due to the electric field perpendicular to the interface between the semiconductor and the insulating film to the provisional term; and setting the sum of the addition as the expansion amount.

According to a third aspect of the present invention, there is provided a computer-implemented method for simulating a semiconductor device, comprising steps of: inputting physical constants of the semiconductor device; performing iterative calculation in which potential distribution, electron current density, hole current density, electron temperature, and hole temperature are solved using a energy transport model represented by charge conservation equations, electron current continuation equations, hole current continuation equations, electron energy conservation equations, and hole energy conservation equations; wherein each iteration of the calculation comprises steps of: calculating an expansion amount of a band gap using an interim solution to take into consideration a quantum effect in an inversion layer; correcting potentials of electrons and holes with the expansion amount of the band gap to take into consideration the quantum effect in the inversion layer; wherein the expansion amount is obtained by steps of: providing a provisional term representing the expansion amount, based on a calculation equation in accordance with a van Dort model; regarding the provisional term as being caused by zeroth-order energy perturbation due to an electric field perpendicular to an interface between a semiconductor and an insulating film; adding one or more terms representing first- and/or higher-order energy perturbation due to the electric field perpendicular to the interface between the semiconductor and the insulating film to the provisional term; and setting the sum of the addition as the expansion amount.

The method according to the first to third aspects may further comprise a step of displaying a result of simulation graphically.

In the method according to the first to third aspects, the number of the terms representing the first- and/or higher-order energy perturbation may be equal to one, and a sum $\Delta\varepsilon$ of the provisional term and the term representing the first- and/or higher-order energy perturbation may be represented as follows:

$$\Delta\varepsilon = \left\{ \frac{13}{9}\beta\left(\frac{\varepsilon_r\varepsilon_0}{4k_BT}\right)^{\frac{1}{3}} E_\perp^{\frac{2}{3}} + \delta\varepsilon_{cr}(E_\perp) \right\} f(y), \qquad (44)$$

wherein

9

$$\delta\varepsilon_{cr}(E_\perp)=c_{cr}E_\perp^{b_{cr}};\tag{45}$$

and

$$f(y)=\frac{2\exp(-y^2)}{1+\exp(-2y^2)},\tag{46}$$

wherein

$\varepsilon_r$ : relative dielectric constant of semiconductor;
$\varepsilon_0$ : dielectric constant of vacuum;
$k_B$ : Boltzmann's constant;
$T$ : lattice temperature;
$E_\perp$ : electric field perpendicular to the interface between semiconductor and insulating film;
$y$ : normalized distance in depth direction of substrate from the interface between semiconductor and insulating film; and
$\beta$, $c_{cr}$, $b_{cr}$ : parameter.

BRIEF DESCRIPTION OF THE DRAWINGS

Fig. 1 is a diagram showing a flowchart of the Newton's method;
Fig. 2 is a schematic diagram showing the flow of the processing of the Newton's method;
Fig. 3 is a diagram showing an example of an analysis mesh.
Fig. 4 is a diagram showing a flowchart of a coupled method;
Fig. 5 is a diagram showing a flowchart of Gummel method;
Fig. 6 is a schematic diagram showing a control volume;
Fig. 7 is a schematic diagram showing the comparison between a carrier distribution based on the quantum mechanics and a carrier distribution based on the classical mechanics;
Fig. 8 is a diagram showing a calculation result based on a van Dort model;
Fig. 9 is a flowchart showing a device simulation method according to of the present invention;
Fig. 10 is a diagram showing a calculation result of an embodiment 1 of the present invention;
Fig. 11 is a diagram showing a calculation result of an embodiment 2 of the present invention; and
Fig. 12 is a diagram showing another calculation result based on the van Dort mode;

DETAILED DESCRIPTION OF THE PREFERRED EMBODIMENTS

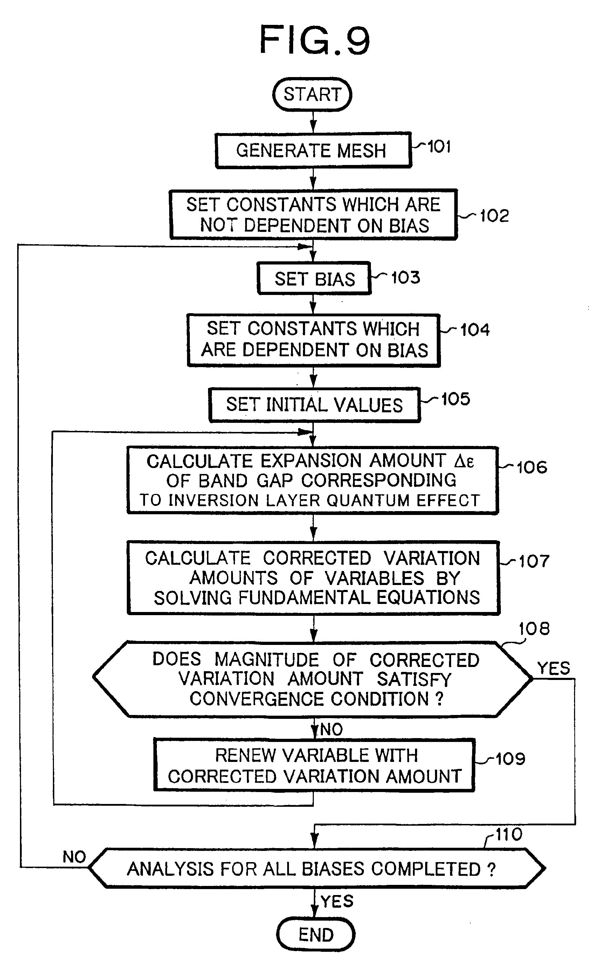

Preferred embodiments according to the present invention will be described hereunder with reference to the accompanying drawings.
The processing flow of the present invention is shown in the flowchart of Fig. 9. The processing flow as shown in Fig. 9 is executed on a computer.
In the embodiment of the present invention, one-dimensional, two-dimensional or three-dimensional potential distribution, current density distribution and hole density distribution are determined by a repetitive numerical calculation using a drift-diffusion mode represented by a charge conservation equation, an electron current continuation equation and a hole current continuation equation. Alternatively, one-dimensional, two-dimensional or three-dimensional potential distribution, current density distribution, hole density distribution, electron temperature distribution and hole temperature distribution are determined by a repetitive numerical calculation using an energy transport mode represented by a charge conservation equation, an electron current continuation equation, a hole current continuation equation, an electron energy conservation equation and a hole energy conservation equation. The same processing flow is applied to both of the drift-diffusion model and the energy transport model.
First, a one-dimensional, two-dimensional or three-dimensional simulation area is determined in silicon and a mesh is generated in the simulation area (step 101).
Subsequently, constants which are not dependent on the bias are set (step 102). In the case of the drift-diffusion mode, these constants are the dielectric constant, the elementary charge, the donor density, the acceptor density, the Boltzmann's constant, the lattice temperature and $\beta, c_{cr}, b_{cr}$ used in the equations (45) and (46). In the case of the energy transport mode, these constants are the effective mass of electron, the effective mass of hole, the inverse effective mass tensor of electron, the inverse effective mass tensor of hole, the electron equilibrium temperature, the hole equilibrium temperature, the electron equilibrium energy and the hole equilibrium energy in addition to these constants of the drift-diffusion mode case.

Subsequently, a bias to be analyzed (the value of a voltage applied to each electrode of the device) is set (step 103).

Subsequently, constants dependent on the bias are set (step 104). In the case of the drift-diffusion model, the constants dependent on the bias are the carrier re-coupling term, the carrier generating term, the electron mobility and the hole mobility. In the case of the energy transport model, these constants dependent on the bias are the electron momentum relaxation time, the hole momentum relaxation time, the average electron energy, the average hole energy, the electron energy relaxation time, the hole energy relaxation time, the relaxation time corresponding to the electron energy flux density, the relaxation time corresponding to the hole energy flux density, the electron velocity and the hole velocity in addition to the constants of the drift-diffusion mode case.

Subsequently, the initial values of respective variables to be solved in the fundamental equations to be analyzed are set (step 105). Here, the variables to be solved are the potential, the electron density and the hole density in the case of the drift-diffusion model. In the case of the energy transport model, these variables are the electron temperature and the hole temperature in addition to the variables of the drift-diffusion model case.

Subsequently, the expansion amount $\Delta\varepsilon$ of the band gap corresponding to the inverse layer quantum effect is calculated by using the calculations of the method of the present invention, that is, the equations (47), (48) and (49) (step 106).

Subsequently, simultaneous partial differential equations as shown in 902 of Fig. 4 and 1002 to 1006 of Fig. 5 which are derived from the fundamental equations taking $\Delta\varepsilon$ into consideration through the Newton's method are solved to determine corrected variation amounts of the variables (processing step 107). The matrixes shown in 902 of Fig. 4 and 1002 to 1006 of Fig. 5 are used for the energy transport model. However, similar simultaneous partial differential equations are also solved in the case of the drift-diffusion model. The corrected variation amounts in the case of the drift-diffusion mode are the corrected variation amount $\delta\Psi_i$ of the potential, the corrected variation amount $\delta n_i$ of the electron density and the corrected variation amount $\delta p_i$ of the hole density, and the correction variation amounts in the case of the energy transport model are the corrected variation amount $\delta Tn_i$ of the electron temperature and the corrected variation amount $\delta Tp_i$ of the hole temperature in addition to the corrected variation amounts of the drift-diffusion model case.

Subsequently, it is judged whether the magnitude of the corrected variation amounts satisfies the convergence condition (step 108).

If the convergence judgment condition is not satisfied in the convergence condition judgement (step 108), the processing goes to a processing step 109 to renew each variable with the corrected variation amount, and then the repetitive calculation from the step 106 to the step 107 is repeated. The convergence judgment condition may be a judgment condition as to whether the corrected variation amount of each variable is below a threshold value of each variable. Or, in the case of the drift-diffusion mode, the convergence judgment condition may be a judgment condition as to whether the values at the left sides of the charge conservation equation, the electron current continuation equation and the hole current continuation equation are near to zero or not when the currently determined variable values are used, or in the case of the energy transport mode, the convergence judgment condition may be a judgment condition as to whether the values at the left sides of the charge conservation equation, the electron current continuation equation, the hole current continuation equation, the electron energy conservation equation and the hole energy conservation equation are near to zero or not when the currently-determined variable values are used.

The repetition of the processing from the step 106 to the step 109 is the repetitive calculation based on the Newton's method described above, however, the coupled method or Gummel method may be used. However, if good initial values are given in step S105, the coupled method is preferably used to shorten the calculation time.

On the other hand, if the convergence judgment condition is satisfied in the convergence condition judgment of the step 108, the processing goes to step 110 to judge whether the analysis of all the biases has been completed. If there is any bias which has not been analyzed, the same processing is repeated from the step 103. If all the biases have been analyzed, the processing is finished.

The foregoing description is on the processing flow of this embodiment, and the theoretical reasonability of the calculations (44), (45) and (46) of the present invention will be described hereunder.

First, in the calculation equations of the van Dort model, the expansion amount $\Delta\varepsilon$ of the band gap corresponding to the inverse layer quantum effect is calculated as a quantity which is proportional to 2/3 of the electric field perpendicular to the interface of the gate oxide film. Such a quantity is obtained from the solution of an analytical (which means that the equation is solved in the form of the equation itself but does not mean that the equation is solved numerically) one-dimensional Schrödinger's equation based on triangular potential approximation in which the shape of the potential in the vicinity of the gate oxide film is approximated by a triangle [Ryo Dan, "Process Device Simulation Technology", issued by Sangyo Tosho in 1990, pp252; the power of the electric field F of the equation (6.10) is represented by 2/3].

However, the actual potential shape is more greatly deformed from the triangle as the gate voltage is increased, and thus this approximation is getting worse.

Here, in order to correct this deformation, the following high-order perturbations are considered on the assumption that the equation of the van Dort model based on the triangular potential approximation is regarded as the zero-order perturbation due to the electric field perpendicular to the Si-SiO$_2$ interface (the interface between the semiconductor and the insulating film) for the energy.

$$\langle E_0|H|E_0\rangle \propto E_\perp^{\frac{2}{3}} \qquad \text{(van Dort model)} \tag{47}$$

$$\sum_{\alpha \neq 0} \frac{\langle E_0|H|\alpha\rangle\langle\alpha|H|E_0\rangle}{E_0 - E_\alpha} \propto E_\perp^{\frac{4}{3}} \qquad \text{(first-order perturbation)} \tag{48}$$

$$\text{second-order perturbation} = E_\perp^{2} \tag{49}$$

$$\text{n-th order perturbation} = E_\perp^{2(1+n)/3} \tag{50}$$

$E_0$ : Energy of ground level
$E_\alpha$ : Energy out of ground level
H : Hamiltonian
$\langle p|H|q\rangle$ : Transition probability from state p to state q in quantum mechanics

If the term $\alpha E_\perp^{2/3}$ of the van Dort model which represents the expansion amount $\Delta\varepsilon$ of the band gap is added with the first and higher orders (the term proportional to $E_\perp^{4/3}$, the term proportional $E_\perp^2$, .., the term proportional to $E_\perp^{n/3}$) as correction terms, the expansion amount $\Delta\varepsilon$ of the band gap corresponding to the inverse layer quantum effect is calculated with more excellent approximation. In the above embodiment, taking it into consideration that the perturbation term of n-th order is not necessarily further smaller than the perturbation term of (n-1)-th order and in order to simplify the calculation amount reducing purpose, the sum of the first-order perturbation term and higher-order perturbation terms is approximately represented by one power term for the electric field $E_\perp$, that is, the term of the $b_{cr}$-power of the electric field $E_\perp$ ($b_{cr}$ >4/3).The one power term for the electric field $E_\perp$ is the term in the equation (48) of the calculation equations of the present invention.

When a computer having a high operating performance is used, in place of one power term, the first-order and higher-order perturbation terms may be directly added to the term of the van Dort model to represent the expansion amount $\Delta\varepsilon$ of the band gap.

[Embodiment 1]

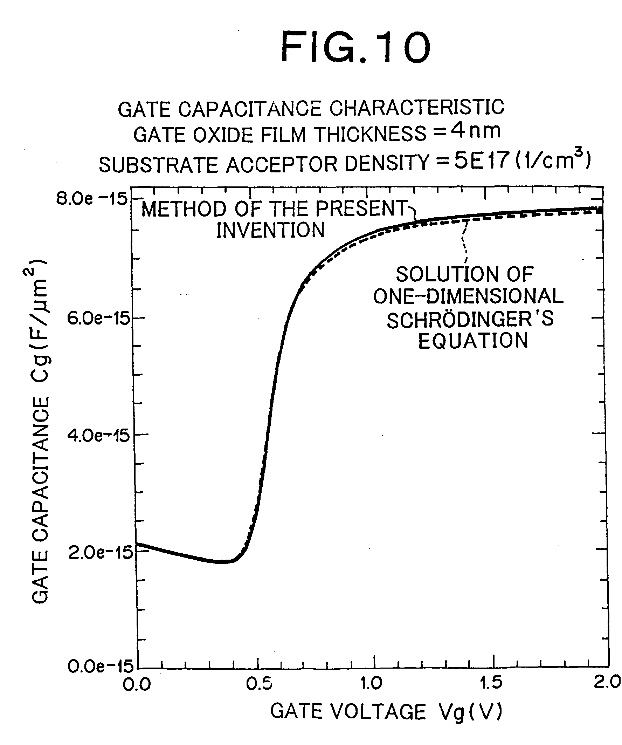

Fig. 10 shows a calculation result for the gate capacitance which was obtained by using the potential distribution, the electron density distribution and the hole density distribution obtained by applying the method of the present invention.

This result was obtained by calculating the capacitance-gate voltage characteristic for a one-dimensional MOS capacitance device having a gate oxide film thickness of 4nm and a substrate acceptor density of $5\times10^{17}$/cm$^3$. The calculation result based on the method of the present invention is very coincident with the result based on the analysis of solving the one-dimensional Schrödinger equation described above, and it is more excellently improved than the conventional van Dort model shown in Fig. 8. In this embodiment, the value of the coefficient $\beta$ of the term based on the van Dort model was set to $4.1\times10^{-8}$[eVcm], the value of the exponent $b_{cr}$ of the power of the electric field was set to 1.4 (dimensionless), and the value of the parameter $c_{cr}$ was set to $1.0$[V/(V/cm)$^{bcr}$].

[Embodiment 2]

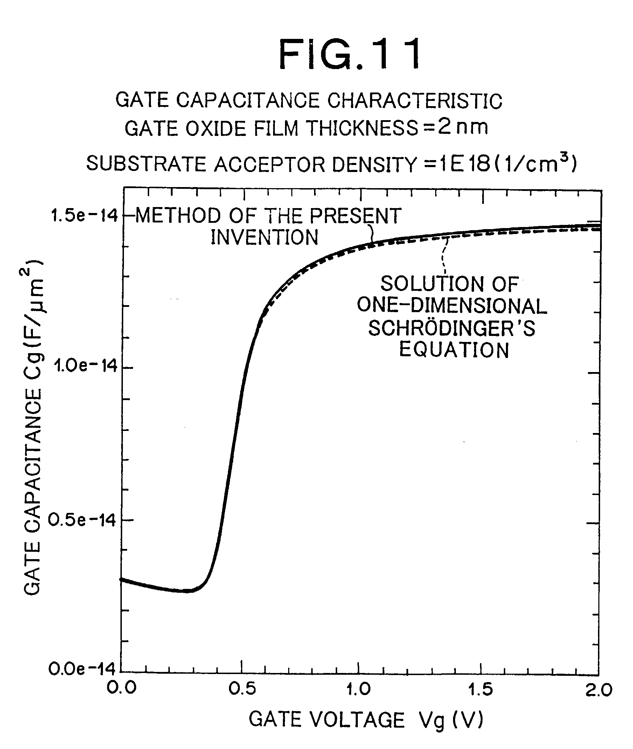

Next, Fig. 11 shows a calculation result for the gate capacitance which was obtained by using the potential distribution, the electron density distribution and the hole density distribution obtained by applying the method of the present invention.

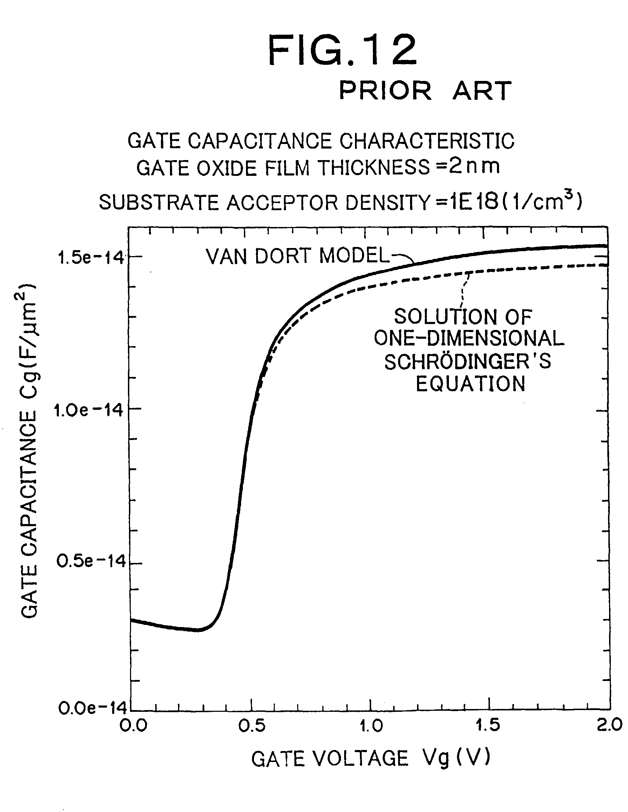

This result was obtained by calculating the capacitance-gate voltage characteristic for a one-dimensional MOS capacitance device having a gate oxide film thickness of 2nm and a substrate acceptor density of $1\times10^{18}/cm^3$. The calculation result based on the method of the present invention is very coincident with the result based on the analysis of solving the one-dimensional Schrödinger equation described above, and it is more excellently improved than the conventional van Dort model shown in Fig. 12. In this embodiment, the value of the coefficient $\beta$ of the term based on the van Dort model was set to $4.1\times10^{-8}$[eVcm], the value of the exponent $b_{cr}$ of the power of the electric field was set to 1.4 (dimensionless), and the value of the parameter $c_{cr}$ was set to $1.0$[V/(V/cm)$^{bcr}$] as in the case of the embodiment 1.

In the embodiments 1 and 2, it is shown that the one-dimensional simulation result and the solution of the one-dimensional equation are very coincident with each other. If such coincidence is confirmed, the two-dimensional or three-dimensional simulation could be subsequently carried out.

It is also expected that the above parameters are applicable to the gate oxide film thickness of 2nm which is the lower limit of the current semiconductor process, and the above parameters are also applicable to the substrate acceptor density of $1\times10^{18}/cm^3$ or less.

As described above, according to the effect of the present invention, there can be performed the device simulation bringing a result which more excellently reflects the inverse layer quantum effect of the MOS device.

**Claims**

**1.** A computer-implemented method for simulating a semiconductor device, comprising steps of:

inputting physical constants of said semiconductor device;
correcting potentials of electrons and holes with an expansion amount of a band gap to take into consideration a quantum effect in an inversion layer;
simulating a semiconductor device using the corrected potentials of said electrons and holes;
wherein said expansion amount is obtained by steps of:

providing a provisional term representing said expansion amount, based on a calculation equation in accordance with a van Dort model;
regarding said provisional term as being caused by zeroth-order energy perturbation due to an electric field perpendicular to an interface between a semiconductor and an insulating film;
adding one or more terms representing first- and/or higher-order energy perturbation due to said electric field perpendicular to said interface between said semiconductor and said insulating film to said provisional term; and
setting the sum of the addition as said expansion amount.

**2.** The method as set forth in claim 1, further comprising a step of displaying a result of simulation graphically.

**3.** The method as set forth in claim 1, wherein the number of the terms representing said first- and/or higher-order energy perturbation is equal to one, and a sum $\Delta\varepsilon$ of said provisional term and the term representing said first- and/or higher-order energy perturbation is represented as follows:

$$\Delta\varepsilon = \left\{\frac{13}{9}\beta\left(\frac{\varepsilon_r\varepsilon_0}{4k_BT}\right)^{\frac{1}{3}}E_\perp^{\frac{2}{3}} + \delta\varepsilon_{cr}(E_\perp)\right\}f(y),$$

wherein

$$\delta\varepsilon_{cr}(E_\perp)=c_{cr}E_\perp^{b_{cr}};$$

and

$$f(y) = \frac{2\exp(-y^2)}{1 + \exp(-2y^2)},$$

wherein

$\varepsilon_r$ : relative dielectric constant of semiconductor;
$\varepsilon_0$ : dielectric constant of vacuum;
$k_B$ : Boltzmann's constant;
$T$ : lattice temperature;
$E_\perp$ : electric field perpendicular to the interface between semiconductor and insulating film;
$y$ : normalized distance in depth direction of substrate from the interface between semiconductor and insulating film; and
$\beta$, $c_{cr}$, $b_{cr}$ : parameter.

4.  A computer-implemented method for simulating a semiconductor device, comprising steps of:

inputting physical constant of said semiconductor device;
performing iterative calculation in which potential distribution, electron current density, and hole current density are solved using a drift-diffusion model represented by charge conservation equations, electron current continuation equations, and hole current continuation equations;

wherein each iteration of said calculation comprises steps of:

calculating an expansion amount of a band gap using an interim solution to take into consideration a quantum effect in an inversion layer;
correcting potentials of electrons and holes with said expansion amount of said band gap to take into consideration said quantum effect in said inversion layer;

wherein said expansion amount is obtained by steps of:

providing a provisional term representing said expansion amount, based on a calculation equation in accordance with a van Dort model;
regarding said provisional term as being caused by zeroth-order energy perturbation due to an electric field perpendicular to an interface between a semiconductor and an insulating film;
adding one or more terms representing first- and/or higher-order energy perturbation due to said electric field perpendicular to said interface between said semiconductor and said insulating film to said provisional term; and
setting the sum of the addition as said expansion amount.

5.  The method as set forth in claim 4, further comprising a step of displaying a result of simulation graphically.

6.  The method as set forth in claim 4, wherein the number of the terms representing said first- and/or higher-order energy perturbation is equal to one, and a sum $\Delta\varepsilon$ of said provisional term and the term representing said first- and/or higher-order energy perturbation is represented as follows:

$$\Delta\varepsilon = \left\{\frac{13}{9}\beta\left(\frac{\varepsilon_r\varepsilon_0}{4k_BT}\right)^{\frac{1}{3}}E_\perp^{\frac{2}{3}} + \delta\varepsilon_{cr}(E_\perp)\right\}f(y),$$

wherein

$$\delta\varepsilon_{cr}(E_\perp) = c_{cr}E_\perp^{b_{cr}};$$

and

$$f(y) = \frac{2\exp(-y^2)}{1 + \exp(-2y^2)},$$

wherein

$\varepsilon_r$ : relative dielectric constant of semiconductor;
$\varepsilon_0$ : dielectric constant of vacuum;
$k_B$ : Boltzmann's constant;
$T$ : lattice temperature;
$E_\perp$ : electric field perpendicular to the interface between semiconductor and insulating film;
$y$ : normalized distance in depth direction of substrate from the interface between semiconductor and insulating film; and
$\beta$, $c_{cr}$, $b_{cr}$ : parameter.

7. A computer-implemented method for simulating a semiconductor device, comprising steps of:

inputting physical constants of said semiconductor device;
performing iterative calculation in which potential distribution, electron current density, hole current density, electron temperature, and hole temperature are solved using a energy transport model represented by charge conservation equations, electron current continuation equations, hole current continuation equations, electron energy conservation equations, and hole energy conservation equations;

wherein each iteration of said calculation comprises steps of:

calculating an expansion amount of a band gap using an interim solution to take into consideration a quantum effect in an inversion layer;
correcting potentials of electrons and holes with said expansion amount of said band gap to take into consideration said quantum effect in said inversion layer;

wherein said expansion amount is obtained by steps of:

providing a provisional term representing said expansion amount, based on a calculation equation in accordance with a van Dort model;
regarding said provisional term as being caused by zeroth-order energy perturbation due to an electric field perpendicular to an interface between a semiconductor and an insulating film;
adding one or more terms representing first- and/or higher-order energy perturbation due to said electric field perpendicular to said interface between said semiconductor and said insulating film to said provisional term; and
setting the sum of the addition as said expansion amount.

8. The method as set forth in claim 7, further comprising a step of displaying a result of simulation graphically.

9. The method as set forth in claim 7, wherein the number of the terms representing said first- and/or higher-order energy perturbation is equal to one, and a sum $\Delta\varepsilon$ of said provisional term and the term representing said first- and/or higher-order energy perturbation is represented as follows:

$$\Delta\varepsilon = \left\{ \frac{13}{9}\beta\left(\frac{\varepsilon_r\varepsilon_0}{4k_BT}\right)^{\frac{1}{3}} E_\perp^{\frac{2}{3}} + \delta\varepsilon_{cr}(E_\perp) \right\} f(y),$$

wherein

$$\delta\varepsilon_{cr}(E_\perp) = c_{cr}E^{b_{cr}};$$

and

$$f(y) = \frac{2\exp(-y^2)}{1 + \exp(-2y^2)},$$

wherein

$\varepsilon_r$ : relative dielectric constant of semiconductor;
$\varepsilon_0$ : dielectric constant of vacuum;
$k_B$ : Boltzmann's constant;
$T$ : lattice temperature;
$E_\perp$ : electric field perpendicular to the interface between semiconductor and insulating film;
$y$ : normalized distance in depth direction of substrate from the interface between semiconductor and insulating film; and
$\beta$, $c_{cr}$, $b_{cr}$ : parameter.

# FiG.1

$$\text{START}$$

$$\text{SET INITIAL VALUE } x_0 \quad \sim 701$$

$$i = 0 \quad \sim 702$$

$$\delta x_i = -\frac{F(x_i)}{F'(x_i)} \quad \sim 703$$

$$\delta x_i < \varepsilon ? \quad \sim 704$$

YES

NO

$$x_{i+1} = x_i + \delta x_i \quad \sim 705$$
$$i = i + 1$$

$$\text{END}$$

# FIG.2

INITIAL VALUE SOLUTION

# FIG.3

# FIG.4

START

SET INITIAL VALUES

$\Psi_0 \quad n_0 \quad p_0 \quad T_{n0} \quad T_{p0}$

$i = 0$ — 901

SOLVE — 902

$$\begin{pmatrix} F'_{\Psi\Psi i} & F'_{\Psi n i} & F'_{\Psi p i} & F'_{\Psi Tn i} & F'_{\Psi Tp i} \\ F'_{n\Psi i} & F'_{nn i} & F'_{np i} & F'_{nTn i} & F'_{nTp i} \\ F'_{p\Psi i} & F'_{pn i} & F'_{pp i} & F'_{pTn i} & F'_{pTp i} \\ F'_{Tn\Psi i} & F'_{Tn n i} & F'_{TnP i} & F'_{TnTn i} & F'_{TnTp i} \\ F'_{Tp\Psi i} & F'_{Tp n i} & F'_{TpP i} & F'_{TpTn i} & F'_{TpTp i} \end{pmatrix} \begin{pmatrix} \delta\Psi_i \\ \delta n_i \\ \delta p_i \\ \delta T_{ni} \\ \delta T_{pi} \end{pmatrix} = \begin{pmatrix} -F_{\Psi i} \\ -F_{ni} \\ -F_{pi} \\ -F_{Tni} \\ -F_{Tpi} \end{pmatrix}$$

CONVERGENCE JUDGMENT — 903

$\delta\Psi_i < \varepsilon_\Psi$?

$\delta n_i < \varepsilon_n$?

$\delta p_i < \varepsilon_p$?

$\delta T_{ni} < \varepsilon_{Tn}$?

$\delta T_{pi} < \varepsilon_{Tp}$?

YES

NO

$\Psi_{i+1} = \Psi_i + \delta\Psi_i$ — 904

$n_{i+1} = n_i + \delta n_i$

$p_{i+1} = p_i + \delta p_i$

$Tn_{i+1} = Tn_i + \delta Tn_i$

$Tp_{i+1} = Tp_i + \delta Tp_i$

$i = i + 1$

END

FIG.5

$$( \text{START} )$$

SET INITIAL VALUES ~1001
$$\Psi_0 \quad n_0 \quad p_0 \quad T_{n0} \quad T_{p0}$$
$$i = 0$$

SOLVE ~1002
$$F'_{\Psi i} \, \delta \Psi_i = -F_{\Psi i}$$

SOLVE ~1003
$$F'_{n i} \, \delta n_i = -F_{n i}$$

SOLVE ~1004
$$F'_{p i} \, \delta p_i = -F_{p i}$$

SOLVE ~1005
$$F'_{T n i} \, \delta T_{n i} = -F_{T n i}$$

SOLVE ~1006
$$F'_{T p i} \, \delta T p_i = -F_{T p i}$$

CONVERGENCE JUDGMENT ~1007
$$\delta \Psi_i < \varepsilon_\Psi \, ?$$
$$\delta n_i < \varepsilon_n \, ?$$
$$\delta p_i < \varepsilon_p \, ?$$
$$\delta T_{n i} < \varepsilon_{T n} ?$$
$$\delta T_{p i} < \varepsilon_{T p} ?$$

YES

NO

~1008
$$\Psi_{i+1} = \Psi_i + \delta \Psi_i$$
$$n_{i+1} = n_i + \delta n_i$$
$$p_{i+1} = p_i + \delta p_i$$
$$T n_{i+1} = T n_i + \delta T n_i$$
$$T p_{i+1} = T p_i + \delta T p_i$$
$$i = i + 1$$

$$( \text{END} )$$

# FIG.6

# FIG.7

CARRIER DISTRIBUTION

DEPTH FROM INTERFACE OF GATE OXIDE (μm)

# FIG.8
## PRIOR ART

GATE CAPACITANCE CHARACTERISTIC
GATE OXIDE FILM THICKNESS = 4 nm

SUBSTRATE ACCEPTOR DENSITY = 5 E 17 (1/cm$^3$)

# FIG.9

```
                    ( START )
                        │
                        ▼
        ┌───────────────────────────────┐
        │       GENERATE MESH           │─── 101
        └───────────────────────────────┘
                        │
                        ▼
        ┌───────────────────────────────┐
        │  SET CONSTANTS WHICH ARE      │
        │  NOT DEPENDENT ON BIAS        │─── 102
        └───────────────────────────────┘
                        │
                        ▼
            ┌───────────────────┐
            │     SET BIAS      │─── 103
            └───────────────────┘
                        │
                        ▼
        ┌───────────────────────────────┐
        │  SET CONSTANTS WHICH          │─── 104
        │  ARE DEPENDENT ON BIAS        │
        └───────────────────────────────┘
                        │
                        ▼
            ┌───────────────────┐
            │  SET INITIAL VALUES │─── 105
            └───────────────────┘
                        │
                        ▼
        ┌───────────────────────────────┐
        │  CALCULATE EXPANSION AMOUNT Δε│─── 106
        │  OF BAND GAP CORRESPONDING    │
        │  TO INVERSION LAYER QUANTUM EFFECT│
        └───────────────────────────────┘
                        │
                        ▼
        ┌───────────────────────────────┐
        │  CALCULATE  CORRECTED VARIATION│─── 107
        │  AMOUNTS  OF  VARIABLES  BY   │
        │  SOLVING FUNDAMENTAL EQUATIONS │
        └───────────────────────────────┘
                        │                              108
                        ▼
        ╱───────────────────────────────╲
       ╱   DOES  MAGNITUDE  OF  CORRECTED ╲──── YES
       ╲   VARIATION  AMOUNT  SATISFY     ╱
        ╲  CONVERGENCE CONDITION ?      ╱
         ╲─────────────────────────────╱
                        │ NO
                        ▼
        ┌───────────────────────────────┐
        │  RENEW VARIABLE WITH          │─── 109
        │  CORRECTED VARIATION AMOUNT   │
        └───────────────────────────────┘
                        │
                        ▼
                                                110
        ╱───────────────────────────────╲
  NO ──╱   ANALYSIS FOR ALL BIASES COMPLETED ? ╲
        ╲─────────────────────────────╱
                        │ YES
                        ▼
                    ( END )
```

# FIG.10

GATE CAPACITANCE CHARACTERISTIC
GATE OXIDE FILM THICKNESS = 4 nm
SUBSTRATE ACCEPTOR DENSITY = 5E17 (1/cm$^3$)

# FIG.11

GATE CAPACITANCE CHARACTERISTIC
GATE OXIDE FILM THICKNESS = 2 nm

SUBSTRATE ACCEPTOR DENSITY = 1E18(1/cm$^3$)

# FIG.12
## PRIOR ART

GATE CAPACITANCE CHARACTERISTIC
GATE OXIDE FILM THICKNESS $=2\,nm$
SUBSTRATE ACCEPTOR DENSITY $=1E\,18\,(1/cm^3)$